# FASCICULE DE BREVET EUROPEEN

(11) **EP 1 896 324 B1**
(45) Date de publication et mention de la délivrance du brevet: **05.11.2014**
(21) Numéro de dépôt: 06777427.3
(22) Date de dépôt: 22.06.2006
(51) Int. Cl.: B64C 25/50

(54) **ATTERRISSEUR D'AÉRONEF AVEC DISPOSITIF DE DIRECTION À ENCOMBREMENT RÉDUIT**
FAHRWERK EINES FLUGZEUGS MIT EINER KOMPAKTEN LENKVORRICHTUNG
LANDING GEAR OF AN AIRCRAFT WITH COMPACT STEERING DEVICE

(30) Priorité: 28.06.2005 FR 0551798
(43) Date de publication de la demande: 12.03.2008
(73) Titulaire: AIRBUS OPERATIONS (S.A.S), 31060 Toulouse (FR)
(72) Inventeur: DE RUFFRAY, Paul, 31100 Toulouse (FR); MOREL, Rodolphe, 31300 Toulouse (FR)
(74) Mandataire: Gicquel, Olivier Yves Gérard
(86) Numéro de dépôt international: PCT/EP2006/063480
(87) Numéro de publication internationale: WO 2007/000411

(56) Documents cités:
- FR-A- 1 334 565
- GB-A- 791 101
- GB-A- 1 071 474
- GB-A- 1 215 552
- GB-A- 2 161 123
- US-A- 2 970 792

## Description

La présente invention concerne un dispositif de direction à encombrement réduit pour atterrisseur d'aéronef.

Les dispositifs de direction pour atterrisseurs d'aéronefs comportent traditionnellement des vérins, disposés perpendiculairement à une jambe d'atterrisseur, agissant sur l'orientation de la jambe de l'atterrisseur avant.

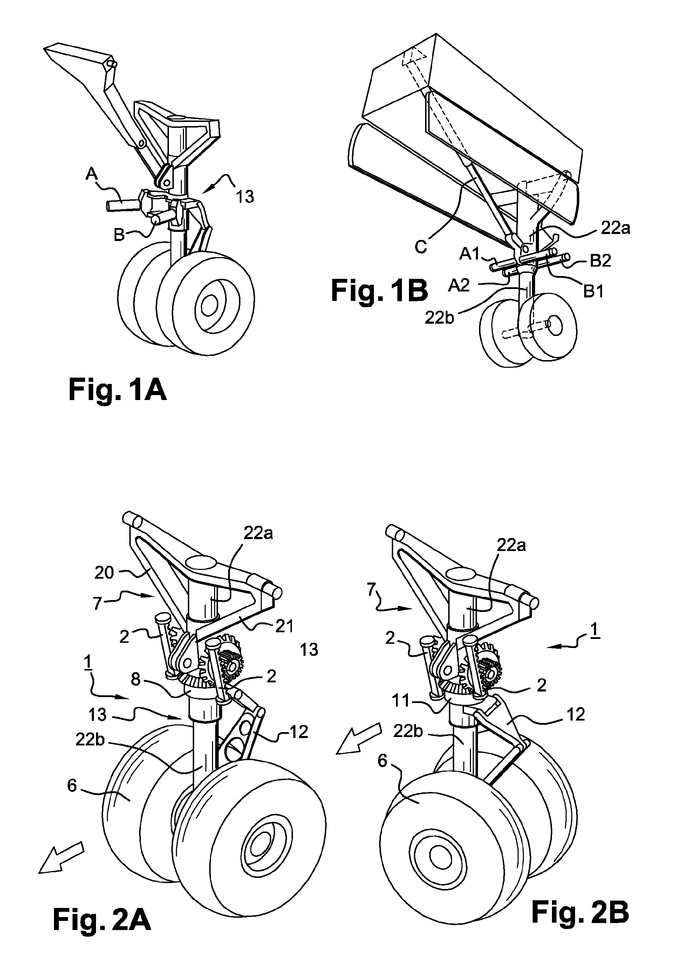

Ces vérins sont fixés sur le fût recevant cette jambe de train par un bras et sont raccordés par des rotules à une bague solidaire au moyen d'un compas de la partie inférieure tournante de la jambe de train en sorte de commander la rotation de la jambe de train. Un exemple de réalisation antérieure est donné en figure 1.

Outre le compas, dans ces dispositifs antérieurs au moins un élément de liaison, les vérins selon l'exemple, est disposé perpendiculairement à la jambe de train et dépasse de la jambe de train. Cet élément nécessite un espace important dans la case de train pour son logement. Le document GB 2 161 123 A décrit effectivement un tel dispositif et reflète donc l'état de la technique antérieure.

La présente invention propose de réduire l'encombrement du dispositif mobile de direction d'un atterrisseur pour aéronef, en particulier l'atterrisseur avant, en vue de réduire les dimensions de la case de train dans laquelle se loge cet atterrisseur.

Pour ce faire, la présente invention concerne un atterrisseur d'aéronef selon la revendication 1 comportant au moins un moyen de manoeuvre en rotation des roues de l'atterrisseur disposé le long de la jambe de l'atterrisseur.

Le moyen de manoeuvre disposé le long de la jambe de l'atterrisseur comporte au moins un vérin et une crémaillère, le vérin actionnant la crémaillère.

Plus particulièrement, la crémaillère entraîne, au travers de pignons de renvoi d'angle, en rotation une couronne rotative d'entraînement en rotation d'un coulisseau portant les roues de l'atterrisseur.

Selon un mode de réalisation particulier de l'invention, la couronne rotative est coaxiale avec la jambe de l'atterrisseur et entraîne les roues en rotation au travers d'une bague tournante connectée à un compas dirigeant lesdites roues.

Ainsi le dispositif de direction disposé le long de la jambe d'atterrisseur ne dépasse pas dans une direction perpendiculaire à la jambe et n'impose pas d'agrandir la case de train dans une direction verticale et/ou transversale pour son logement lorsque le train est rentré.

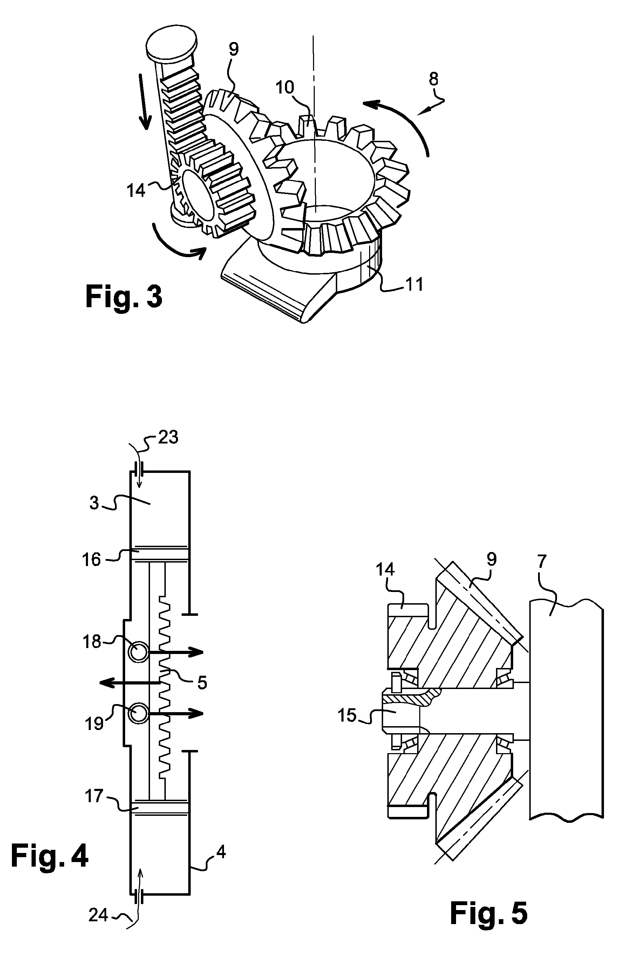

D'autres caractéristiques et avantages de l'invention seront apparents à la lecture de la description qui va suivre d'un exemple de réalisation non limitatif de l'invention en référence aux dessins qui représentent:
en figures 1A et 1 B:des vues en perspective d'atterrisseurs munis de dispositifs de direction de l'art antérieur;
en figures 2A et 2B: des vues en perspective d'un atterrisseur équipé du dispositif selon l'invention respectivement en position droite et en position de virage;
en figure 3: un détail du dispositif selon l'invention en perspective;
en figure 4: une vue schématique d'un dispositif à vérins et crémaillère selon un mode de réalisation particulier de l'invention;
en figure 5: une vue en coupe d'un système de pignon des figures 2A et 2B.

La figure 1A représente un atterrisseur avant d'un aéronef comportant un dispositif de direction de l'art antérieur.

Selon cet exemple, le dispositif de l'art antérieur comporte deux vérins A et B disposés perpendiculairement à l'axe de la jambe 13 de l'atterrisseur et formant un angle entre eux.

Dans le cas d'un aéronef de masse importante et apte à tourner selon un faible rayon de braquage, les vérins sont d'une longueur importante pour offrir une course de fonctionnement suffisante.

Lors de la rentrée de l'atterrisseur (ou train d'atterrissage) dans sa case, appelée case de train, les vérins dépassent de l'encombrement de l'atterrisseur vers le haut ce qui augmente son volume et donc sa masse et imposent une hauteur importante à cette case ce qui diminue la place disponible au dessus de cette case.

L'exemple de la figure 1B est un atterrisseur muni d'une contrefiche télescopique C et comportant des vérins A1, A2, B1, B2 dépassant latéralement de la jambe de train constituée par un fût 22a et un coulisseau 22b.

Dans ce dernier cas un encombrement latéral important est pris par ces vérins.

Pour réduire les dimensions et la masse de la case de train, il y a lieu de diminuer l'encombrement de l'atterrisseur ce qu'offre la présente invention en limitant l'encombrement des pièces dépassant de la jambe de train.

L'exemple de réalisation d'atterrisseur 1 selon l'invention des figures 2A et 2B comporte pour ce faire deux moyens 2, de manoeuvre en rotation des roues 6 de l'atterrisseur, disposés le long de la jambe 13 de l'atterrisseur.

Sur la partie fixe supérieure 22a appelée fût se raccordent des triangles de renfort 20, 21 aux sommets opposés desquels se trouvent les axes de rotation du train permettant la rentrée et la sortie du train dans sa case.

Les triangles de renfort 20, 21 et le fût 22a peuvent être réalisés en une seule pièce, les triangles 20, 21 peuvent aussi être des éléments séparés.

La partie fixe supérieure forme un tube supérieur 7 en prolongement duquel, vers le bas, se trouve la partie mobile ou coulisseau 22b, porteuse des roues 6 et montée sur amortisseur en sorte de pouvoir coulisser et tourner dans le tube 7 du fût 22a.

La rotation des roues est réalisée comme dans l'art antérieur au travers d'un compas 12 mis en rotation par une bague tournante 11 et faisant tourner le coulisseau 22b dans le fût 22a.

Les moyens de manoeuvre, disposés le long de la jambe de l'atterrisseur comportent ici deux paires de vérins 2 mais un seul vérin est aussi envisageable.

Selon le détail de la figure 4 chaque vérin 2 est constitué de vérins simples 3, 4 en opposition alimentés par un circuit hydraulique double 23, 24 et travaillant en opposition. Les vérins sont disposés le long du tube supérieur 7 et parallèlement à ce tube pour dépasser le moins possible de l'encombrement de la jambe de train.

Entre les vérins en opposition 3, 4 se trouve une crémaillère 5, les vérins actionnant la crémaillère. Le ou les vérins 2, 3, 4 et la crémaillère 5 sont fixés sur le tube supérieur 7 de la jambe de l'atterrisseur.

Une réalisation avec un seul vérin à double effet entraînant une crémaillère sortant du vérin est envisageable selon l'invention pour un aéronef de faible masse pour lequel les efforts de rotation des roues restent modérés.

Pour faire tourner les roues, la crémaillère 5 entraîne en rotation une couronne rotative 8 d'entraînement des roues 6 de l'atterrisseur représentée en figure 3.

La couronne est coaxiale avec la jambe 13 de l'aterrisseur et est entraînée par la crémaillère au travers de pignons de renvoi d'angle 9, 10.

Les pignons de renvoi d'angle 9, 10 sont des pignons coniques, le pignon 9 tournant autour d'un axe perpendiculaire à l'axe de la jambe et le pignon 10 tournant autour de l'axe de la jambe.

Selon l'invention, la couronne rotative 8 est réalisée coaxialement avec la bague tournante11 reliée à un compas similaire à celui de l'art antérieur de sorte que la crémaillère disposée parallèlement à la jambe puisse entraîner les roues 6 de l'atterrisseur au travers de la bague tournante 11 connectée au compas 12 qui commande la rotation du coulisseau 22b.

Le pignon 9, le pignon 10 et la bague tournante 11 peuvent être des éléments assemblés ou bien être usinés dans une pièce unique.

Comme vu précédemment, les pignons de renvoi d'angle 9, 10 comportent un premier pignon conique 9, d'axe 15 perpendiculaire à l'axe de la jambe d'atterrisseur, s'engrenant sur un second pignon conique 10 coaxial avec la couronne 8. Le premier pignon conique 9 est réalisé dans une pièce comportant un pignon droit 14, la crémaillère 5 s'engrenant sur le pignon droit 14 coaxial au premier pignon conique 9.

Le vérin 2 comporte deux vérins en opposition 3, 4 et la crémaillère 5 est réalisée dans une tige centrale commune entre les pistons 16, 17 des deux vérins en opposition 3, 4 disposés l'un au dessus de l'autre.

Ainsi lorsque le liquide hydraulique pousse le piston 16 du vérin supérieur 3, la crémaillère descend, met en rotation le premier pignon conique 9 autour de l'axe 15, ce qui fait tourner la couronne 8 et la bague 11 dans un premier sens alors que, lorsque le liquide hydraulique remplit la cavité sous le piston 17 du vérin inférieur 4, la crémaillère remonte et fait tourner la couronne 8 dans le sens opposé.

Pour éviter toute flexion de la tige centrale portant la crémaillère, cette tige s'appuie sur au moins un galet de guidage 18, 19 disposé du côté de la crémaillère opposé au pignon droit 14.

L'invention ne se limite pas aux exemples représentés et notamment un moyen de manoeuvre unique, tel qu'un moteur électrique rotatif et à pignon de sortie conique d'axe vertical s'engrenant directement sur le second pignon conique solidaire de la couronne, disposé le long de la jambe 13 de l'atterrisseur 1 peut remplacer l'ensemble vérin crémaillère et premier pignon conique.

L'invention s'applique en outre à une jambe de train pourvue ou non de contre-fiche télescopique.

## Revendications

1. Atterrisseur (1) d'aéronef comportant une jambe (13) d'atterrisseur qui comporte un tube supérieur (7), une couronne rotative (8) d'entraînement en rotation d'un coulisseau (22b) portant les roues de l'atterrisseur et au moins un moyen, de manoeuvre en rotation (2, 3, 4, 5) des roues (6) de l'atterrisseur disposé le long de la jambe (13) de l'atterrisseur, comportant au moins un vérin (2, 3, 4) et une crémaillère (5) fixés sur ledit tube supérieur (7), le vérin actionnant la crémaillère (5) qui entraîne en rotation, au travers de pignons de renvoi d'angle (9, 10), la couronne rotative (8) d'entraînement en rotation d'un coulisseau (22b) portant les roues (6) de l'atterrisseur, dans lequel ledit au moins un vérin, disposé le long de la jambe de l'atterrisseur est disposé le long du tube supérieur 7 et parallèlement à ce tube, et les pignons de renvoi d'angle (9, 10) comportent un premier pignon conique (9) d'axe (15) perpendiculaire à l'axe de la jambe d'atterrisseur s'engrenant sur un second pignon conique (10) coaxial avec la couronne (8).

2. Atterrisseur selon la revendication 1 **caractérisé en ce que** la couronne rotative (8) est coaxiale avec la jambe (13) de l'atterrisseur et entraîne les roues (6) au travers d'une bague tournante (11) connectée à un compas (12) dirigeant lesdites roues (6).

3. Atterrisseur selon la revendication 1 ou 2 **caractérisé en ce que** la crémaillère (5) s'engrène sur un pignon droit (14) coaxial au premier pignon conique (9).

4. Atterrisseur selon l'une des revendications 1 à 3 **caractérisé en ce que** ledit vérin (2) comporte deux vérins en opposition (3, 4) et **en ce que** la crémaillère (5) est réalisée dans une tige centrale commune entre les pistons (16, 17) de deux vérins en opposition (3, 4).

5. Atterrisseur selon la revendication 4 **caractérisé en ce que** la tige centrale s'appuie sur au moins un galet de guidage (18, 19).

## Patentansprüche

1. Fahrwerk (1) eines Luftfahrzeugs, das eine Fahrwerkstrebe (13), die ein oberes Rohr (7) aufweist, einen Drehkranz (8) für den Drehantrieb eines die Räder des Fahrwerks tragenden Gleitstücks (22b) und mindestens eine entlang der Fahrwerkstrebe (13) angeordnete Einrichtung zur Drehbewegung (2, 3, 4, 5) der Räder (6) des Fahrwerks aufweist, die mindestens einen Zylinder (2, 3, 4) und eine Zahnstange (5) aufweist, die am oberen Rohr (7) befestigt sind, wobei der Zylinder die Zahnstange (5) betätigt, die über Winkelzahnräder (9, 10) den Drehkranz (8) für den Drehantrieb eines die Räder (6) des Fahrwerks tragenden Gleitstücks (22b) in Drehung versetzt, wobei der entlang der Fahrwerkstrebe angeordnete mindestens eine Zylinder entlang des oberen Rohrs (7) und parallel zu diesem Rohr angeordnet ist, und die Winkelzahnräder (9, 10) ein erstes Kegelzahnrad (9) mit einer Achse (15) lotrecht zur Achse der Fahrwerkstrebe aufweisen, das in ein zweites Kegelzahnrad (10) koaxial zum Kranz (8) eingreift.

2. Fahrwerk nach Anspruch 1, **dadurch gekennzeichnet, dass** der Drehkranz (8) zur Fahrwerkstrebe (13) koaxial ist und die Räder (6) über einen drehbaren Ring (11) antreibt, der mit einem die Räder (6) lenkenden Kniegelenk (12) verbunden ist.

3. Fahrwerk nach Anspruch 1 oder 2, **dadurch gekennzeichnet, dass** die Zahnstange (5) in ein Stirnzahnrad (14) koaxial zum ersten Kegelzahnrad (9) eingreift.

4. Fahrwerk nach einem der Ansprüche 1 bis 3, **dadurch gekennzeichnet, dass** der Zylinder (2) zwei gegenläufige Zylinder (3, 4) aufweist, und dass die Zahnstange (5) in einer gemeinsamen zentralen Stange zwischen den Kolben (16, 17) von zwei gegenläufigen Zylindern (3, 4) ausgeführt ist.

5. Fahrwerk nach Anspruch 4, **dadurch gekennzeichnet, dass** die zentrale Stange sich auf mindestens einer Führungsrolle (18, 19) abstützt.

## Claims

1. Aircraft landing gear (1) comprising a landing gear strut (13) which comprises an upper tube (7), a rotary annulus (8) which turns an extending leg (22b) to which the landing gear wheels are attached, and, located alongside the strut (13) of the landing gear, at least one means (2, 3, 4, 5) for the turn manoeuvring of the wheels (6) of the landing gear, comprising at least one actuator (2, 3, 4) and at least one rack (5) which are fixed to the said upper tube (7), the actuator actuating the rack (5) which, via bevel pinions (9, 10), turns the rotary annulus (8) which turns an extending leg (22b) to which the wheels (6) of the landing gear are attached, wherein the said at least one actuator, located alongside the strut of the landing gear, is located alongside and parallel to the upper tube (7), and the bevel pinions (9, 10) comprise a first conical pinion (9) whose axis (15) is perpendicular to the axis of the landing gear strut and which meshes with a second conical pinion (10) coaxial with the annulus (8).

2. Landing gear according to Claim 1, **characterized in that** the rotary annulus (8) is coaxial with the strut (13) of the landing gear and turns the wheels (6) via a turning ring (11) connected to torque links (12) governing the said wheels (6).

3. Landing gear according to Claim 1 or 2, **characterized in that** the rack (5) meshes with a spur pinion (14) which is coaxial with the first conical pinion (9).

4. Landing gear according to one of Claims 1 to 3, **characterized in that** the said actuator (2) comprises two actuators in opposition (3, 4) and **in that** the rack (5) is formed in a common central rod between the pistons (16, 17) of two actuators in opposition (3, 4).

5. Landing gear according to Claim 4, **characterized in that** the central rod bears against at least one guide roller (18, 19).
